# EUROPÄISCHE PATENTSCHRIFT

(11) **EP 1 715 760 B1**
(45) Veröffentlichungstag und Bekanntmachung des Hinweises auf die Patenterteilung: **02.01.2008**
(21) Anmeldenummer: 04802395.6
(22) Anmeldetag: 27.12.2004
(51) Int. Cl.: A23L 1/16, A21C 11/00

(54) **VERFAHREN ZUR HERSTELLUNG VON TEIGWAREN, DANACH ERHÄLTLICHE TEIGWAREN UND ANLAGE ZUR DURCHFÜHRUNG DES VERFAHRENS**
METHOD FOR THE PRODUCTION OF PASTA, PASTA OBTAINABLE ACCORDING THERETO AND SYSTEM FOR CARRYING OUT SAID METHOD
PROCÉDÉ POUR PRODUIRE DES PÂTES ALIMENTAIRES, PÂTES ALIMENTAIRES AINSI OBTENUES ET INSTALLATION PERMETTANT DE METTRE EN OEUVRE LE PROCÉDÉ

(30) Priorität: 19.02.2004 DE 102004008443; 12.03.2004 DE 102004012589
(43) Veröffentlichungstag der Anmeldung: 02.11.2006
(73) Patentinhaber: Bühler AG, 9240 Uzwil (CH)
(72) Erfinder: SEILER, Werner, CH-9523 Züberwangen (CH)
(74) Vertreter: Frommhold, Joachim
(86) Internationale Anmeldenummer: PCT/CH2004/000755
(87) Internationale Veröffentlichungsnummer: WO 2005/079597

(56) Entgegenhaltungen:
- DE-B- 1 301 237
- FR-A- 956 449
- GB-A- 1 097 795
- US-A- 4 423 082
- MESTRES C ET AL: "Comparison of various processes for making maize pasta" JOURNAL OF CEREAL SCIENCE, ACADEMIC PRESS LTD, Bd. 17, Nr. 3, 1993, Seite 277, XP002288299 ISSN: 0733-5210
- DATABASE WPI Section Ch, Week 198532 Derwent Publications Ltd., London, GB; Class D11, AN 1985-193605 XP002325460 -& JP 60 120953 A (NISSHIN FLOUR MILLING CO) 28. Juni 1985 (1985-06-28)

## Beschreibung

Die Erfindung bezieht sich auf ein Verfahren sowie eine Anlage zur Herstellung von Teigwaren aus klebereiweiss-freien Rohmaterialien, wie z.B. Mehl und/oder Griess auf Basis von Mais, Reis, Hirse oder Gerste, oder aus Stärke.

Teigwaren auf Maisbasis, Reisbasis oder unter Verwendung anderer klebereiweiss-freier Rohmaterialien sind an sich bekannt. Da jedoch klebereiweiss-freie Rohmaterialien im Gegensatz zu Weizen oder Roggen kein Kleber-Eiweiss (Gluten) enthalten, das zur Herstellung von Teigwaren als Kleber-Gerüst im Teig vorhanden sein muss, lassen sich z.B. Maismehl oder Maisgriess, ähnlich wie Reismehl, nicht ohne weiteres zu Mais- oder Reis-Teigwaren verarbeiten. Deshalb wird dem hierfür verwendeten Maismehl oder Reismehl z.B. Weizenmehl als Lieferant von Kleber-Eiweiss hinzugegeben. Alternativ können ebenfalls klebrig wirkende modifizierte Stärke, wie z.B. Alpha-Stärke, oder Eidotter dem Maismehl hinzugegeben werden, um die den kleberfreien Rohmaterialien fehlenden Kleber-Eigenschaften zu verleihen. Die mechanischen bzw. rheologischen Eigenschaften von Teig werden durch seinen Kleber-Anteil und seinen Stärke-Anteil beeinflusst. Das Kleber-Gerüst des Teiges prägt vorwiegend die elastische Komponente des viskoelastischen Teiges, während die (native oder modifizierte) Stärke des Teiges vorwiegend die viskose Komponente des Teiges prägt.

Gründe für die Herstellung von Teigwaren auf Basis klebereiweiss-freier Rohmaterialien sind z.B. die Tatsache, dass immer mehr Leute an Zöliakie, einer Allergie gegen Klebereiweiss, leiden, aber auch das Bestreben, auch in Weltregionen, in denen vorwiegend Mais, Reis, Hirse oder andere lokale Rohmaterialien, nicht aber Weizen oder Roggen gedeihen, Teigwaren auf der Basis solcher lokal verfügbarer Rohmaterialien herstellen zu können.

Das Beimischen von Weizen- oder Roggenmehl zu klebereiweiss-freien Rohmaterialien als Lieferant von Klebereiweiss ist daher aus gesundheitlichen und/oder wirtschaftlichen Gesichtspunkten oftmals unmöglich.

Aus der EP 0 792 109 B1 ist die Herstellung von Teigwaren bekannt, wobei ausser Maismehl und Wasser keine weiteren Bestandteile verwendet werden. Anstelle der weiter oben erwähnten Beimischung von Weizenmehl, Alpha-Stärke oder Eidotter befindet sich bei dem Verfahren der EP 0 792 109 B1 aber das Maismehl vor dem Mischen mit Wasser und vor der Formgebung im gekochten oder vorgekochten Zustand. Das Maismehl wurde somit vor der Herstellung der Teigwaren zumindest teilweise modifiziert (vorgekocht, gelatiniert) und getrocknet. Wenn es dann zur Herstellung von Mais-Teigwaren wieder mit Wasser vermischt, geknetet und geformt wird, liefert der zuvor modifizierte Anteil der Maisstärke die zur Teig- und Teigwarenherstellung notwendige Klebrigkeit.

Mit diesem Verfahren erhält man zwar reine Mais-Teigwaren, die nur aus Maismehl und Wasser gebildet werden. Das Verfahren hat jedoch den Nachteil, dass dem durch Kochen bzw. Vorkochen vorbehandelten Maismehl zur Herstellung der Mais-Teigwaren erneut Wasser hinzugegeben werden muss, das aber nach der Vorbehandlung zumindest zum Teil entfernt wurde. Dieses vorherige Entfernen und anschliessende Wiederhinzugeben von Wasser in das Maismehl ist energieintensiv und treibt die Kosten des Verfahrens in die Höhe.

Weitere Verfahren zur Herstellung von klebereiweiss-freien Teigwaren sind z.B. aus der DE 13 01 237 und der FR 956 449 bekannt, in denen die Herstellung von Reisteigwaren bzw. Maisteigwaren beschrieben wird, wobei jedoch spezielle Anforderungen an das Rohmaterial gestellt werden.

Bei der DE 13 01 237 ist ein Ausgangsmaterial (Reismehl) mit einem Amylosegehalt von mehr als 20% notwendig, während bei der FR 956 449 speziell Maismehl und Maisgriess verwendet werden und bei einem Dampfdruck von 2 bar gearbeitet wird.

Die US 4 423 082 beschreibt ein Verfahren zum Herstellen von Schnellkoch-Teigwaren, wobei jedoch nicht von klebereiweiss-freien Rohstoffen die Rede ist. Ausserdem erfolgt hier ein grosser Teil des Energieeintrages in den Teig durch mechanische Scherung, was aber zwangsläufig zu einer Beschädigung der Stärkekörner führt, wodurch die organoleptischen Eigenschaften des Produktes beeinträchtigt werden.

Für den Artikel "Comparison of Various Processes for Making Maize Paste" von C. Mestres et al., Journal of Cereal Science, Academic Press Ltd., Bd. 17, Nr. 3, 1993, Seiten 277 - 290, wird ein Verfahren zum Herstellen von Maisteigwaren beschrieben, wobei jedoch der Teig vor dem Verpressen auf 50°C bis 60°C abgekühlt wird, so dass unter den gegebenen Bedingungen vor dem Verpressen eine Retrogradation (Stärkekristallisation) stattfindet. Die so gewonnenen Teigwaren weisen einen Kochverlust von 16% bis 77% auf.

Die JP 60 120 953 beschreibt ein Verfahren zum Herstellen von Nudeln aus Weizenmehl ohne Kneten des Teiges.

Die GB 1 097 795 beschreibt ein Verfahren zum Herstellen von Reisnudeln. Auch hier erfolgt eine Abkühlung des Teiges vor dem Verpressen.

Der vorliegenden Erfindung liegt daher die Aufgabe zugrunde, ein Verfahren zur Herstellung von Teigwaren auf Basis von klebereiweiss-freien Rohmaterialien bereitzustellen, das eine sparsame Energiebilanz hat und auf Weizen- oder Roggenmehl als Klebereiweiss-Lieferant verzichten kann, oder bei dem auch trotz der Verwendung klebereiweiss-haltiger Rohmaterialien eine Qualitätssteigerung der Teigwaren erzielt werden kann.

Diese Aufgabe wird erfindungsgemäss durch das Verfahren nach Anspruch 1 bzw. die Anlage nach Anspruch 14 gelöst.

Das erfindungsgemässe Verfahren zur Herstellung von Teigwaren aus klebereiweiss-freien Rohmaterialien, wie z.B. Mehl und/oder Griess auf Basis von Mais, Reis, Hirse oder Gerste, oder aus Stärke, weist die folgenden Schritte auf:
a) Erstellen einer Rohmaterial-Trockenmischung;
b) Zudosieren von Wasser, mit einer Temperatur von 30°C bis 90°C, insbesondere von 75°C bis 85°C, zu der Rohmaterial-Trockenmischung, während dieses Rohmaterial bewegt wird, so dass ein Teig bzw. eine angefeuchtete Rohmaterial-Mischung mit einem Wassergehalt von 20% bis 60%, insbesondere von 38% bis 45% erhalten wird;
c) Zudosieren von Dampf mit einer Dampf-Eingangstemperatur von 100°C bis 150°C, insbesondere mit 100°C bis 120°C zu dem Teig, während der Teig bzw. die angefeuchtete Rohmaterial-Mischung bewegt wird;
d) Formen des so gewonnenen Teiges zu definierten Teig-Gebilden; und
e) Trocknen der geformten Teig-Gebilde zu Teigwaren, wobei das Massenverhältnis der zudosierten Wassermenge zu der zudosierten Dampfmenge im Bereich von 5 : 1 bis 1 : 1 liegt.

Durch das Zudosieren von sowohl Dampf als auch Wasser lässt sich eine gezielte Gelatinierung der in den klebereiweiss-freien Rohmaterialien enthaltenen Stärke erzielen. Im Falle der Verwendung klebereiweiss-freier Rohmaterialien ist dies notwendig, da in diesen bei der Teigherstellung kein Klebergerüst ausgebildet werden kann.

Es hat sich als besonders vorteilhaft erwiesen, dass zunächst Wasser zu der Rohmaterial-Trockenmischung zudosiert wird, während dieses Rohmaterial bewegt wird, so dass ein Teig bzw. eine angefeuchtete Rohmaterial-Mischung erhalten wird (Schritt b), und dass anschliessend Dampf zu dem Teig zudosiert wird, während der Teig bzw. die angefeuchtete Rohmaterial-Mischung bewegt wird (Schritt c). Dadurch kann eine gezielte Modifizierung bzw. Gelatinierung der Stärke erreicht werden.

Zweckmässigerweise erfolgt die Bewegung der Rohmaterial-Trockenmischung in Schritt b) in einem Mischer, und zwar insbesondere einem Zweiwellenmischer, wobei die Bewegung des Teiges in Schritt c) vorzugsweise in einem Mischer, insbesondere einem Zweiwellenmischer, erfolgt. Ein derartiger Mischer stellt einen idealen Reaktor für die Stärke-Modifizierung in einem kontinuierlichen Verfahren dar. Die Einwirkzeit des Dampfes in dem Mischer bei Schritt c) sollte etwa 10s bis 60s, vorzugsweise 20s bis 30s, betragen.

Alternativ kann die Bewegung der angefeuchteten Rohmaterial-Mischung in Schritt c) auch auf einem Förderband, insbesondere in einem Banddämpfer, erfolgen, wobei in diesem Fall die Einwirkzeit des Dampfes bei Schritt c) etwa 30s bis 5min betragen sollte.

Gemäss einer besonders vorteilhaften Ausführung des erfindungsgemässen Verfahrens wird der Rohmaterial-Mischung mindestens ein Additiv zudosiert. Dieses Additiv kann der Rohmaterial-Trockenmischung in Schritt a) zudosiert werden, es kann aber auch der Rohmaterial-Trockenmischung in Schritt b) zudosiert werden.

Vorzugsweise wird als Additiv ein Monoglyzerid, ein Diglyzerid, ein gehärtetes Fett oder ein Hydrokolloid verwendet. Diese Art von Additiven ist aus ernährungsphysiologischer Sicht unbedenklich, verbessert aber die Qualitätsmerkmale der erfindungsgemäss hergestellten Teigwaren markant, wie weiter untern noch beschrieben wird.

Bei der Verwendung eines Mischers bzw. eines Zweiwellenextruders für die Zudosierung von Wasser in Schritt b) und die Zudosierung von Dampf in Schritt c) findet das Dämpfen in dem Mischer bei einem Arbeitsdruck von 2bar bis 5bar statt.

Unabhängig davon, ob beim Dämpfen in Schritt c) ein Zweiwellenextruder oder ein Banddämpfer verwendet wird, findet die Zudosierung von Dampf in Schritt c) erfindungsgemäss mit einem Dampf-Eingangsdruck von 1 bar bis 10bar statt, wobei die Zudosierung von Dampf in Schritt c) mit einer Dampf-Eingangstemperatur von 100°C bis 150°C, insbesondere mit 100°C bis 120°C, erfolgt. Erfindungsgemäss hat das zuvor in Schritt b) zudosierte Wasser eine Temperatur von 30°C bis 90°C, insbesondere von 75°C bis 85°C.

Erfindungsgemäss wird darauf geachtet, dass der in Schritt b) erhaltene Teig einen Wassergehalt von 20% bis 60%, insbesondere von 38% bis 45%, aufweist, und dass das Massenverhältnis der zudosierten Wassermenge zu der zudosierten Dampfmenge im Bereich von 5:1 bis 1:1, insbesondere von 4:1 bis 2:1, und am bevorzugtesten bei 3:1 liegt.

Die erfindungsgemässe Anlage zur Herstellung von Teigwaren aus klebereiweiss-freien Rohmaterialien, insbesondere zur Durchführung des weiter oben beschriebenen Verfahrens, weist die folgenden Merkmale auf:
➢ eine Mischvorrichtung zum Erstellen einer Rohmaterial-Trockenmischung;
➢ eine Wasser-Dosiervorrichtung zum Zudosieren von Wasser zu der Rohmaterial-Trockenmischung;
➢ eine Dampf-Dosiervorrichtung zum Zudosieren von Dampf zu der angefeuchteten Rohmaterial-Mischung;
➢ eine Rohmaterial-Bewegungsvorrichtung zum Bewegen der Rohmaterial-Trockenmischung und der angefeuchteten Rohmaterial-Mischung;
➢ eine Formvorrichtung zum Formen des aus der Rohmaterial-Mischung gewonnenen Teiges zu definierten Teig-Gebilden; und
➢ eine Teigwaren-Trocknungsvorrichtung zum Trocknen der geformten Teig-Gebilde zu Teigwaren, dadurch gekennzeichnet, dass der Dampf mit einem Dampf-Eingangsdruck von 1 bar bis 10 bar zudosierbar ist.

Die Rohmaterial-Bewegungsvorrichtung kann einen Mischer, insbesondere einen Zweiwellenmischer, oder ein Förderband, insbesondere einen Banddämpfer, aufweisen, wie schon weiter oben ausgeführt wurde.

Bei einer besonders vorteilhaften Ausführung ist der Mischer ein Mischkneter mit einem Gehäuse, einem Rohmaterial-Zufuhrabschnitt, einem Rohteig-Austragsabschnitt sowie mindestens zwei miteinander zusammenarbeitenden, sich von dem Rohmaterial-Zufuhrabschnitt zu dem Rohteig-Austragsabschnitt innerhalb des Gehäuses in einer Förderrichtung bzw. axialen Richtung erstreckenden Arbeitswellen, an denen Misch- und Knetelemente sowie zwangsfördernde Elemente angeordnet sind. Der Mischkneter-Hohlraum kann förderaufseitig von seinem Rohteig-Austragsabschnitt einen Bereich zur peristaltischen Teigknetung besitzen, der jeweils mindestens einen sich verengenden axialen Hohlraum-Bereich aufweist, in welchem die senkrecht zur axialen Richtung gemessene freie Querschnittsfläche des Hohlraums zwischen der Oberfläche der Arbeitswellen und der Innenwand des Gehäuses von einem Bereich mit grosser freier Querschnittsfläche zu einem Bereich mit kleiner freier Querschnittsfläche entlang der axialen Richtung abnimmt. Ausserdem kann der Mischkneter förderaufseitig von seinem Bereich zur peristaltischen Teigknetung einen Bereich zur Teigmischung und Teigförderung besitzen, in welchem an den Arbeitswellen entlang der Förderrichtung aufeinanderfolgend axiale Bereiche mit Förderschnecken und axiale Bereiche mit Mischblöcken angeordnet sind. Vorzugsweise besitzt der Mischkneter förderaufseitig von seinem Bereich zur peristaltischen Teigknetung noch einen Bereich zum Walken bzw. Wirken des Teiges, in welchem an den Arbeitswellen entlang der Förderrichtung Walk- und Wirkschnecken angeordnet sind, die in ihren Schneckenstegen sich in axialer Richtung erstreckende Durchlässe haben, über die benachbarte Windungen eines Schneckenganges miteinander in Fluidverbindung stehen. Diese Durchlässe können schartenartig am Kamm der Schneckenstege oder fensterartig zwischen dem Kern und dem Kamm der Schneckenstege angeordnet sein. Ergänzend kann im Bereich zur peristaltischen Teigknetung die Oberfläche der Arbeitswellen und/oder die der Innenwand des Gehäuses mit einer Antihaftschicht, vorzugsweise aus Teflon, überzogen sein.

Diese apparativen Massnahmen tragen in Verbindung mit den weiter oben genannten Verfahrensmerkmalen zur Optimierung der Qualität der so gewonnenen Teigwaren bei. Im speziellen werden die zum Teil quellfähig gemachten Stärkekörner mittels der rheologisch bedingten Fliesscharakteristik durch Verdichten und Entspannen mit einer sanften Fliessscherung im Druckbereich der Verpressung zur Formung der Teigwaren optimal homogenisiert. Durch diese sanfte Homogenisierung entsteht eine Teigmasse, die sehr uniform bezüglich der Teigtemperatur ist, und die schlussendlich nebst der Instandhaltung der Stärkekörner einen gleichmässigen Massenfluss zur Folge haben.

Die Rohmaterial-Bewegungsvorrichtung kann auch eine klassische Teigpresse mit vorgeschaltetem Mischtrog aufweisen, die dem Zweiwellenmischer nachgeschaltet ist.

Vorzugsweise weist die Rohmaterial-Bewegungsvorrichtung eine Einwellen-Schneckenpresse auf, die dem Zweiwellenmischer unmittelbar nachgeschaltet ist.

Bei einer weiteren vorteilhaften Ausführung umfasst die Einwellen-Schneckenpresse ein Gehäuse, einen Rohteig-Zufuhrabschnitt, einen Teig-Austragsabschnitt sowie eine sich von dem Rohteig-Zufuhrabschnitt zu dem Teig-Austragsabschnitt innerhalb des Gehäuses in einer Förderrichtung bzw. axialen Richtung erstreckende Arbeitswelle, an der zwangsfördernde Elemente angeordnet sind. Der Hohlraum der Einwellen-Schneckenpresse kann förderaufseitig von ihrem Teig-Austragsabschnitt einen Bereich zur peristaltischen Teigknetung besitzen, der jeweils mindestens einen sich verengenden axialen Hohlraum-Bereich aufweist, in welchem die senkrecht zur axialen Richtung gemessene freie Querschnittsfläche des Hohlraums zwischen der Oberfläche der Arbeitswelle und der Innenwand des Gehäuses von einem Bereich mit grosser freier Querschnittsfläche zu einem Bereich mit kleiner freier Querschnittsfläche entlang der axialen Richtung abnimmt.

Um die weiter oben erwähnten Verfahrenstemperaturen zu erzielen, weist der Mischkneter vorzugsweise ein zwischen 40°C und 100°C, vorzugsweise zwischen 50°C und 75°C, temperierbares Gehäuse auf.

Für den weiteren Temperaturverlauf des Verfahrens ist es vorteilhaft, wenn die Einwellen-Schneckenpresse ein zwischen 20°C und 60°C, vorzugsweise zwischen 40°C und 50°C, temperierbares Gehäuse aufweist, wobei es besonders vorteilhaft ist, wenn die nachgeschaltete Formvorrichtung einen Presskopf besitzt, der zwischen 30°C bis 60°C, vorzugsweise zwischen 40°C und 50°C, temperierbar ist.

Mit dem erfindungsgemässen Verfahren und der erfindungsgemässen Anlage lässt sich ein klebereiweis-freies Teigwarenprodukt herstellen, das sich dadurch auszeichnet, dass die im Produkt enthaltene Stärke eine Stärkequellung von 50% bis 100%, insbesondere von 75% bis 85%, aufweist.

Dabei sind die im Produkt enthaltenen Stärkekörner mehrheitlich intakt. Insbesondere sind von den im Produkt enthaltenen Stärkekörnern 60% bis 80% intakt bzw. nicht geplatzt. Dies ist die Voraussetzung für einen geringen Kochverlust und eine geringe Schleimigkeit beim Kochen der erfindungsgemässen Teigwaren. D as erfindungsgemässe Teigwarenprodukt weist daher trotz nicht vorhandenem Kleber-Eiweiss lediglich einen Kochverlust von weniger als 5% der Trockenmasse auf und ist damit durchaus mit Teigwaren auf Basis von Durumweizen vergleichbar.

Ausserdem besitzt das erfindungsgemässe Teigwarenprodukt einen Fettgehalt von weniger als 1 % der Trockenmasse. Es kann aus klebereiweiss-freien Rohmaterialien, wie Mehl und/oder Griess auf Basis von Mais, Reis, Hirse oder Gerste oder aus Stärke, bestehen, doch sind sämtliche anderen klebereiweiss-freien Rohmaterialien denkbar. Es kann zu trockenen oder zu frischen Teigwaren verarbeitet werden.

Im Falle der frischen Teigwaren wird auf den Trocknungsschritt e) verzichtet. Stattdessen können die so hergestellten Frisch-Teigwaren vorgekocht, blanchiert oder pasteurisiert, nachträglich gekühlt oder gefroren werden, wobei sie einen Wassergehalt von mehr als 20 % aufweisen.

Wie im Falle herkömmlicher kleberhaltiger Teigwaren können die erfindungsgemässen Teigwaren als kurzgeschnittene Teigwaren, z.B. in Form von Muscheln, Suppeneinlage, Röhrchen, etc., oder als lange Teigwaren, z.B. in Form von Spaghetti, Lasagne oder Nidi (Nester), etc. geformt werden.

Weitere Vorteile, Merkmale und Anwendungsmöglichkeiten der Erfindung ergeben sich aus der nun folgenden, nicht einschränkend aufzufassenden Beschreibung zweier Ausführungsbeispiele anhand der beigefügten Zeichnung, wobei:
- Fig. 1: ein erstes Ausführungsbeispiel der vorliegenden Erfindung schematisch zeigt; und
- Fig. 2: ein zweites Ausführungsbeispiel der vorliegenden Erfindung schematisch zeigt.

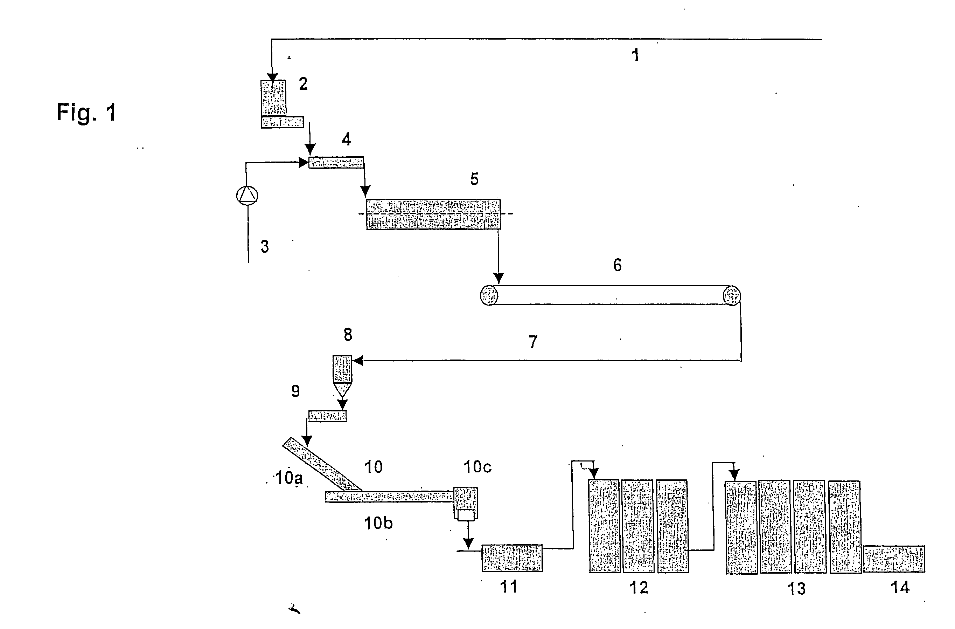

Fig. 1 ist ein schematisches Diagramm eines ersten Ausführungsbeispiels der erfindungsgemässen Anlage zur Durchführung des erfindungsgemässen Verfahrens für die Herstellung von klebereiweiss-freien Teigwaren, wie z.B. Maisteigwaren. Eine pneumatische Förderleitung 1 führt von einer Mühle (nicht gezeigt) zu einer Trocken-Dosiervorrichtung 2. Über die pneumatische Förderleitung 1 kann eine beliebige Rohmaterial-Trockenmischung der Trocken-Dosiervorrichtung 2 zugeführt werden. Die Rohmaterial-Trockenmischung kann vorab in der Mühle gemischt werden. Eine Additiv-Dosiereinheit (nicht gezeigt) für die Trockendosierung eines Additivs kann in der Mühle oder nach der Dosiervorrichtung 2 vorgesehen sein. Der Trocken-Dosiervorrichtung 2 ist ein Schnellmischer 4 nachgeschaltet. Über eine Flüssig-Dosiervorrichtung 3 wird der Trockenmischung in dem Schnellmischer 4 Wasser und ggf. ein Additiv in flüssiger Form zudosiert. Die in diesem Schnellmischer 4 hergestellte Fertigmischung wird einem Mischtrog 5 der Teigwaren-Anlage zugeführt. Dem Mischtrog 5 ist ein Banddämpfer 6 nachgeschaltet. Die in dem Schnellmischer 5 hergestellte Fertigmischung gelangt dann auf diesen Banddämpfer 6, wo die Fertigmischung gedämpft wird. Der Banddämpfer 6 ist über eine weitere pneumatische Förderleitung 7, über einen Abscheider 8, in dem die Förderluft vom Produkt getrennt wird, und über ein Vibrospeiserohr 9 mit einer Teigwarenpresse 10 verbunden, die einen Mischer/Kneter in Form eines Zweiwellenextruders 10a, eine Presse in Form eines Einwellenextruders 10b und einen Presskopf 10c aufweist. Der Teigwarenpresse 10 sind ein Schüttelvortrockner 11, ein Vortrockner 12, ein Endtrockner 13 und ein Kühler 14 nachgeschaltet.

Für die Herstellung von Maisteigwaren ist eine derartige Flüssigdosierung am Anfang des Prozesses erforderlich. Mit dem zudosierten Wasser soll eine leichte Vorquellung der im Mais enthaltenen Maisstärke erreicht werden. Hierfür wird das Wasser mit einer Temperatur zwischen 60°C und 80°C zudosiert. Die erhöhte Wassertemperatur ist zudem notwendig, um das Eindringen des Wassers in den Mais zu beschleunigen.

Im Schnellmischer 4 werden die dosierten Komponenten Maismix und Wasser intensiv miteinander vermischt, so dass das zudosierte Wasser auf die gesamte Oberfläche des Maises verteilt wird. Mit dem heissen Wasser kann bereits eine oberflächliche Stärkemodifizierung stattfinden, die ein leichtes Agglomerieren der Maispartikel zu Folge hat.

Im Mischtrog 5 wird durch die maximal mögliche Verweilzeit ein Eindringen des Wassers in den Mais ermöglicht. Dies erlaubt es, in der nachfolgenden thermischen Behandlung optimale Resultate zu erzielen.

Dem Dämpfprozess in dem Banddämpfer 6 kommt die Aufgabe zu, die vorhandene Stärke teilweise zu gelatinieren, respektive quellbar zu machen.

Während einer Dämpfzeit von 1 min bis 5min kann die Stärkemodifizierung eingestellt werden und somit auch zum Teil die Bissfestigkeit der gekochten Maisteigwaren beeinflusst werden. Der Banddämpfer arbeitet mit einem Dampfeingangsdruck von bis zu 6bar und einem Arbeitsdruck im Dämpfer von etwa 0,5 bar.

Über die pneumatische Förderleitung 7 wird das gekochte Produkt über den Abscheider 8 und das Vibrospeiserohr der Teigwarenpresse 10 zugeführt. In dem Abscheider 8 erfolgt eine Abscheidung von der Förderluft von dem zu fördernden Produkt. Das Vibrospeiserohr 9 sorgt für eine gleichmässige Einspeisung in den Mischer/Kneter 10a der Teigwarenpresse 10.

Die Teigwarenpresse (Bühler Polymatik) muss so gefahren werden, dass die produzierte Menge an aufbereitetem Mais kontinuierlich verarbeitet wird. Die leistungsgebende Dosierung erfolgt am Anfang des Prozesses. Der Mischer/Kneter 10a, die Presse 10b und der Presskopf 10c müssen temperierbar sein, und zwar zumindest im Bereich von 50°C bis 70°C. Die zu fahrenden Drehzahlen sind im Bereich des Standards und müssen je nach Leistung entsprechend rezeptiert werden. Die Teigfeuchte variiert um 40% Wassergehalt.

Die Maisteigwaren verlassen die Teigwarenpresse 10 (10a, 10b, 10c) mit einer höheren Teigfeuchte als traditionelle Kurz- und Langwaren auf Basis von Weizenmehl. Die Anfangsfeuchte der zu trocknenden Produkte beträgt ca. 40%. Der Schüttelvortrockner 11 ist entsprechend ausgelegt, um mit höheren Temperaturen von etwa 50°C bis ca. 90°C, vorzugsweise um 75°C, produzieren können.

Die Trocknungstemperaturen und die Durchlaufzeiten im Vortrockner 12 entsprechen denjenigen bei traditionellen Produkten auf Weizenbasis.

Die Endtrocknung im Endtrockner 13 soll und kann mit höheren Temperaturen als bei den genannten traditionellen Produkten gefahren werden, ohne dass dabei aber die Xantophyllen (gelbe Maisfarbstoffe) negativ beeinflusst werden. Übliche Temperaturen im Endtrockner 13 liegen je nach Anlage und Auslegung derselben bei etwa 75°C bis 90°C.

Die im Kühler 14 durchgeführte Stabilisierung auf Raumtemperatur kann bei entsprechenden Bedingungen wie bei traditionellen Teigwaren erfolgen.

Durch diese Massnahmen wird eine Endfeuchte der erfindungsgemässen Maisteigwaren mit 11,5% bis 12,5% Wassergehalt garantiert.

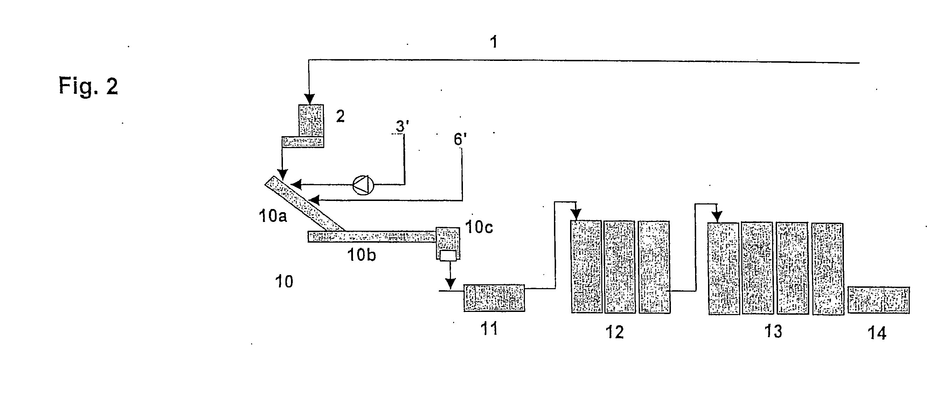

Fig. 2 ist ein schematisches Diagramm eines zweiten Ausführungsbeispiels der erfindungsgemässen Anlage zur Durchführung des erfindungsgemässen Verfahrens für die Herstellung von klebereiweiss-freien Teigwaren, wie z.B. Maisteigwaren. Sämtliche Elemente, die identisch oder analog zu denen des ersten Ausführungsbeispiels der Fig. 1 sind, tragen in Fig. 2 dieselben Bezugszeichen wie in Fig. 1. Ihre Funktion ist identisch oder ähnlich wie in dem ersten Ausführungsbeispiel der Fig. 1.

Während in dem ersten Ausführungsbeispiel der Fig. 1 die Zudosierung von Wasser und danach die Zudosierung von Dampf in dem Schnellmischer 4 bzw. in dem Banddämpfer 6 erfolgen, bevor die so hergestellte Teig-Fertigmischung (angefeuchtete und gedämpfte Rohmaterial-Mischung) in die Teigwarenpresse 10 gelangt, erfolgen die Verfahrenschritte der Zudosierung von Wasser und der Zudosierung von Dampf direkt in die Teigwarenpresse 10, und zwar in deren Mischer/Kneter bzw. Zweiwellenextruder 10a. Die Wasserdosierung erfolgt über die Flüssig-Dosiervorrichtung 3' direkt in den Zweiwellenextruder 10a der Teigwarenpresse 10. Ebenso erfolgt die Dampfdosierung über die Dampf-Dosiervorrichtung 6' direkt in den Zweiwellenextruder 10a der Teigwarenpresse 10. Die Dampfdosierung erfolgt nach bzw. förderabseitig von der Wasserdosierung entlang der Verfahrensstrecke des Zweiwellenextruders. Ansonsten gleichen sich das erste und das zweite Ausführungsbeispiel.

Bei dem zweiten Ausführungsbeispiel erübrigen sich somit der Schnellmischer 4, der Mischtrog 5, der Banddämpfer 6, die zweite Pneumatikleitung 7, der Abscheider 8 sowie das Vibrospeiserohr 9. Das zweite Ausführungsbeispiel kommt daher mit einem viel geringeren apparativen Aufwand aus als das erste Ausführungsbeispiel.

Im Gegensatz zum Dämpferprozess gemäss Ausführungsbeispiel 1 ist hier die Dosierung über die pneumatische Leitung 1 direkt leistungsgebend auf den Prozess der Teigwarenherstellung in der Teigwarenpresse 10 (Bühler-Polymatik).

Für die Flüssigdosierung mittels der Flüssig-Dosiervorrichtung 3 gelten im wesentlichen dieselben Bedingungen wie im Ausführungsbeispiel 1.

Während beim Dämpfprozess gemäss Ausführungsbeispiel 1 im wesentlichen bei Atmosphärendruck oder geringem Überdruck gearbeitet wird, erfolgt das Dämpfen im zweiten Ausführungsbeispiel bei einem Dampf-Arbeitsdruck von etwa 2 bar bis 5 bar im Zweiwellenextruder 10a. Damit der gesamte notwendige Bereich der Stärkemodifizierung realisiert werden kann, ist es notwendig, mittels einer Dampfeinspritzung in dem Prozess des Mischer/Kneters bzw. Zweiwellenextruders 10a die gewünschte Konsistenz des Maises zu erzielen. Über den Grad der Modifizierung lassen sich die Qualitätsmerkmale der Maisteigwaren bezüglich Biss, Mundgefühl und Kochverlust einstellen.

Da der Teilkochprozess im Mischer/Kneter 10a erfolgt, muss dieser bis zu etwa 80°C temperierbar sein. Heisswasser und Dampf oder nur Heisswasser erlauben im Prozess die notwendige Energie in den Mais einzubringen, um den notwendigen Kleberersatz in Form von Stärkekleister zu generieren.

Die Heisswasser- und Dampfbehandlung im Mischer/Kneter 10a verlangen eine Temperierung des Systems im Bereich von 50°Cbis 70°C, um Kondensat zu verhindern und so den Teigtransport in der Schnecke ohne Schlupf oder mit minimalem Schlupf optimal zu erreichen.

Mit der Kopftemperierung wird die Elastizität und die Viskosität der Maisteigmasse so beeinflusst, dass keine unnötigen Scherkräfte und Drücke auftreten, die den Massefluss negativ beeinflussen können. Auch hier ist eine Temperierung im Bereich von 50°C bis 65°C notwendig.

Der Trocknungs- und Stabilisierungsprozess kann identisch zum Trocknungs- und Stabilisierungsprozess des ersten Ausführungsbeispiels durchgeführt werden, so dass auch hier letztendlich Maisteigwaren mit einer Endfeuchte von 11,5% bis 12,5% Wasser erhalten werden.

Die Trocknung aller Produkte erfolgt vorzugsweise mit dem nachfolgend aufgezeigten Trocknungsprofil bezüglich Temperaturen, Feuchte und Zeiten.

| Zone | Temperatur | Feuchte | Verweilzeit |
|---|---|---|---|
| | (°C) | (% rf) | (min) |
| | | | |
| Zone 1 | 30 | 60 | 5 |
| Zone 2 | 60 | 80 | 10 |
| Zone 3 | 80 | 80 | 23 |
| Zone 4 | 82 | 80 | 38 |
| Zone 5 | 88 | 80 | 72 |
| Zone 6 | 88 | 78 | 80 |

## Patentansprüche

1. Verfahren zur Herstellung von Teigwaren aus klebereiweiss-freien Rohmaterialien, wie z.B. Mehl und/oder Griess auf Basis von Mais, Reis, Hirse oder Gerste, oder aus Stärke, wobei das Verfahren die folgenden Schritte aufweist:
a) Erstellen einer Rohmaterial-Trockenmischung;
b) Zudosieren von Wasser mit einer Temperatur von 30°C bis 90°C, insbesondere von 75°C bis 85°C zu der Rohmaterial-Trockenmischung, während dieses Rohmaterial bewegt wird, so dass ein Teig bzw. eine angefeuchtete Rohmaterial-Mischung mit einem Wassergehalt von 20% bis 60%, insbesondere von 38% bis 45% erhalten wird;
c) Zudosieren von Dampf mit einer Dampf-Eingangstemperatur von 100°C bis 150°C, insbesondere mit 100°C bis 120° zu dem Teig, während der Teig bzw. die angefeuchtete Rohmaterial-Mischung bewegt wird;
d) Formen des so gewonnenen Teiges zu definierten Teig-Gebilden; und
e) Trocknen der geformten Teig-Gebilde zu Teigwaren, wobei das Massenverhältnis der zudosierten Wassermenge zu der zudosierten Dampfmenge im Bereich von 5 : 1 bis 1 : 1 liegt.

2. Verfahren nach Anspruch 1, **dadurch gekennzeichnet, dass** die Bewegung der Rohmaterial-Trockenmischung in Schritt b) in einem Mischer, insbesondere einem Zweiwellenmischer, erfolgt.

3. Verfahren nach Anspruch 1, **dadurch gekennzeichnet, dass** die Bewegung des Teiges in Schritt c) in einem Mischer, insbesondere einem Zweiwellenmischer, erfolgt.

4. Verfahren nach Anspruch 3, **dadurch gekennzeichnet, dass** die Einwirkzeit des Dampfes in dem Mischer bei Schritt c) etwa 10s bis 60s, vorzugsweise 20s bis 30s beträgt.

5. Verfahren nach Anspruch 1 oder 2, **dadurch gekennzeichnet, dass** die Bewegung der angefeuchteten Rohmaterial-Mischung in Schritt c) auf einem Förderband, insbesondere in einem Banddämpfer, erfolgt.

6. Verfahren nach Anspruch 5, **dadurch gekennzeichnet, dass** die Einwirkzeit des Dampfes bei Schritt c) 30s bis 5min beträgt.

7. Verfahren nach einem der Ansprüche 1 bis 6, **dadurch gekennzeichnet, dass** der Rohmaterial-Mischung mindestens ein Additiv zudosiert wird.

8. Verfahren nach Anspruch 7, **dadurch gekennzeichnet, dass** das Additiv der Rohmaterial-Trockenmischung in Schritt a) zudosiert wird.

9. Verfahren nach Anspruch 7, **dadurch gekennzeichnet, dass** das Additiv der Rohmaterial-Trockenmischung in Schritt b) zudosiert wird.

10. Verfahren nach einem der Ansprüche 7 bis 9, **dadurch gekennzeichnet, dass** als Additiv mindestens ein Monoglyzerid oder ein Diglyzerid oder ein gehärtetes Fett verwendet wird.

11. Verfahren nach einem der Ansprüche 1 bis 4, **dadurch gekennzeichnet, dass** der in Schritt c) eindosierte Dampf beim Dämpfen einen Arbeitsdruck von 2bar bis 5bar hat.

12. Verfahren nach einem der Ansprüche 1 bis 5, **dadurch gekennzeichnet, dass** die Zudosierung von Dampf in Schritt c) mit einem Dampf-Eingangsdruck von 1 bar bis 10bar erfolgt.

13. Verfahren nach einem der vorhergehenden Ansprüche, **dadurch gekennzeichnet, dass** das Massenverhältnis der zudosierten Wassermenge zu der zudosierten Dampfmenge im Bereich von 4:1 bis 2:1, und am bevorzugtesten bei 3:1 liegt.

14. Anlage zur Durchführung eines Verfahrens zur Herstellung von Teigwaren aus klebereiweiss-freien Rohmaterialien, insbesondere zur Durchführung eines Verfahrens gemäss den Ansprüchen 1 bis 13, mit:
➢ einer Mischvorrichtung zum Erstellen einer Rohmaterial-Trockenmischung;
➢ einer Wasser-Dosiervorrichtung (3; 3') zum Zudosieren von Wasser zu der Rohmaterial-Trockenmischung;
➢ einer Dampf-Dosiervorrichtung (6, 6') zum Zudosieren von Dampf zu der angefeuchteten Rohmaterial-Mischung;
➢ einer Rohmaterial-Bewegungsvorrichtung (5, 6, 10a, 10b; 10a, 10b) zum Bewegen der Rohmaterial-Trockenmischung und der angefeuchteten Rohmaterial-Mischung;
➢ einer Formvorrichtung (10c) zum Formen des aus der Rohmaterial-Mischung gewonnenen Teiges zu definierten Teig-Gebilden; und
➢ einer Teigwaren-Trocknungsvorrichtung (11, 12, 13, 14) zum Trocknen der geformten Teig-Gebilde zu Teigwaren, **dadurch gekennzeichnet, dass** der Dampf mit einem Dampf-Eingangsdruck von 1 bar bis 10 bar zudosierbar ist.

15. Anlage nach Anspruch 14, **dadurch gekennzeichnet, dass** die Rohmaterial-Bewegungsvorrichtung einen Mischer, insbesondere einen Zweiwellenmischer, aufweist.

16. Anlage nach Anspruch 14, **dadurch gekennzeichnet, dass** die Rohmaterial-Bewegungsvorrichtung ein Förderband, insbesondere einen Banddämpfer, aufweist.

17. Anlage nach Anspruch 15, **dadurch gekennzeichnet, dass** der Mischer ein Mischkneter (10a) ist mit einem Gehäuse, einem Rohmaterial-Zufuhrabschnitt, einem Rohteig-Austragsabschnitt sowie mindestens zwei miteinander zusammenarbeitenden, sich von dem Rohmaterial-Zufuhrabschnitt zu dem Rohteig-Austragsabschnitt innerhalb des Gehäuses in einer Förderrichtung bzw. axialen Richtung erstreckenden Arbeitswellen, an denen Misch- und Knetelemente sowie zwangsfördernde Elemente angeordnet sind.

18. Anlage nach Anspruch 17, **dadurch gekennzeichnet, dass** der Mischkneter-Hohlraum förderaufseitig von seinem Rohteig-Austragsabschnitt einen Bereich zur peristaltischen Teigknetung besitzt, der jeweils mindestens einen sich verengenden axialen Hohlraum-Bereich aufweist, in welchem die senkrecht zur axialen Richtung gemessene freie Querschnittsfläche des Hohlraums zwischen der Oberfläche der Arbeitswellen und der Innenwand des Gehäuses von einem Bereich mit grosser freier Querschnittsfläche zu einem Bereich mit kleiner freier Querschnittsfläche entlang der axialen Richtung abnimmt.

19. Anlage nach Anspruch 17 oder 18, **dadurch gekennzeichnet, dass** der Mischkneter förderaufseitig von seinem Bereich zur peristaltischen Teigknetung einen Bereich zur Teigmischung und Teigförderung besitzt, in welchem an den Arbeitswellen entlang der Förderrichtung aufeinanderfolgend axiale Bereiche mit Förderschnecken und axiale Bereiche mit Mischblöcken angeordnet sind.

20. Anlage nach einem der Ansprüche 17 bis 19, **dadurch gekennzeichnet, dass** der Mischkneter förderaufseitig von seinem Bereich zur peristaltischen Teigknetung einen Bereich zum Walken bzw. Wirken des Teiges besitzt, in welchem an den Arbeitswellen entlang der Förderrichtung Walk- und Wirkschnecken angeordnet sind, die in ihren Schneckenstegen sich in axialer Richtung erstreckende Durchlässe haben, über die benachbarte Windungen eines Schneckenganges miteinander in Fluidverbindung stehen.

21. Anlage nach Anspruch 20, **dadurch gekennzeichnet, dass** die Durchlässe schartenartig am Kamm der Schneckenstege angeordnet sind.

22. Anlage nach Anspruch 20 oder 23, **dadurch gekennzeichnet, dass** Durchlässe fensterartig zwischen dem Kern und dem Kamm der Schneckenstege angeordnet sind.

23. Anlage nach einem der Ansprüche 18 bis 22, **dadurch gekennzeichnet, dass** in seinem Bereich zur peristaltischen Teigknetung die Oberfläche der Arbeitswellen und/oder die der Innenwand des Gehäuses mit einer Antihaftschicht, vorzugsweise aus Teflon, überzogen ist.

24. Anlage nach einem der Ansprüche 15 bis 23, **dadurch gekennzeichnet, dass** die Rohmaterial-Bewegungsvorrichtung eine Teigpresse mit vorgeschaltetem Mischtrog aufweist, die dem Zweiwellenmischer nachgeschaltet ist.

25. Anlage nach einem der Ansprüche 15 bis 23, **dadurch gekennzeichnet, dass** die Rohmaterial-Bewegungsvorrichtung eine Einwellen-Schneckenpresse (10b) aufweist, die dem Zweiwellenmischer (10a) unmittelbar nachgeschaltet ist.

26. Anlage nach Anspruch 25, **dadurch gekennzeichnet, dass** die Einwellen-Schneckenpresse ein Gehäuse, einen Rohteig-Zufuhrabschnitt, einen Teig-Austragsabschnitt sowie eine sich von dem Rohteig-Zufuhrabschnitt zu dem Teig-Austragsabschnitt innerhalb des Gehäuses in einer Förderrichtung bzw. axialen Richtung erstreckenden Arbeitswelle, an der zwangsfördernde Elemente angeordnet sind, aufweist.

27. Anlage nach Anspruch 26, **dadurch gekennzeichnet, dass** der Hohlraum der Einwellen-Schneckenpresse förderaufseitig von ihrem Teig-Austragsabschnitt einen Bereich zur peristaltischen Teigknetung besitzt, der jeweils mindestens einen sich verengenden axialen Hohlraum-Bereich aufweist, in welchem die senkrecht zur axialen Richtung gemessene freie Querschnittsfläche des Hohlraums zwischen der Oberfläche der Arbeitswelle und der Innenwand des Gehäuses von einem Bereich mit grosser freier Querschnittsfläche zu einem Bereich mit kleiner freier Querschnittsfläche entlang der axialen Richtung abnimmt.

28. Anlage nach einem der Ansprüche 17 bis 27, **dadurch gekennzeichnet, dass** der Mischkneter ein zwischen 40°C und 100°C, vorzugsweise zwischen 50°C und 75°C, temperierbares Gehäuse aufweist.

29. Anlage nach einem der Ansprüche 25 bis 27, **dadurch gekennzeichnet, dass** die Einwellen-Schneckenpresse ein zwischen 20°C und 60°C, vorzugsweise zwischen 40°C und 50°C, temperierbares Gehäuse aufweist.

30. Anlage nach einem der Ansprüche 14 bis 29, **dadurch gekennzeichnet, dass** die Formvorrichtung (10c) einen Presskopf aufweist, der zwischen 30°C bis 60°C, vorzugsweise zwischen 40°C und 50°C, temperierbar ist.

31. Anlage nach einem der Ansprüche 14 bis 30 **dadurch gekennzeichnet, dass** alle Verfahrensstufen on-line im Prozess überwacht, geregelt und gesteuert werden.

32. Klebereiweiss-freies Teigwarenprodukt, das nach einem Verfahren gemäss einem der Ansprüche 1 bis 13 hergestellt wurde, **dadurch gekennzeichnet, dass** die im Produkt enthaltene Stärke eine Stärkequellung von 50% bis 100%, insbesondere von 75% bis 85%, aufweist, wobei die im Produkt enthaltenen Stärkekörner mehrheitlich intakt sind.

33. Teigwarenprodukt nach Anspruch 32, **dadurch gekennzeichnet, dass** von den im Produkt enthaltenen Stärkekörnern 60% bis 80% intakt bzw. nicht geplatzt sind.

34. Teigwarenprodukt nach Anspruch 32 oder 33, **dadurch gekennzeichnet, dass** es einen Kochverlust von weniger als 5% der Trockenmasse aufweist.

35. Teigwarenprodukt nach einem der Ansprüche 32 bis 34, **dadurch gekennzeichnet, dass** es einen Fettgehalt von weniger als 1 % der Trockenmasse aufweist.

36. Teigwarenprodukt nach einem der Ansprüche 32 bis 35, **dadurch gekennzeichnet, dass** es aus klebereiweiss-freien Rohmaterialien, wie Mehl und/oder Griess aus Mais, Reis, Hirse oder Gerste oder aus Stärke, gefertigt ist.

37. Verfahren zur Herstellung von Frischteigwaren aus klebereiweiss-freien Rohmaterialien, wie z.B. Mehl und/oder Griess auf Basis von Mais, Reis, Hirse oder Gerste oder aus Stärke, wobei das Verfahren die folgenden Schritte aufweist:
a) Erstellen einer Rohmaterial-Trockenmischung;
b) Zudosieren von Wasser mit einer Temperatur von 30°C bis 90°C, insbesondere von 75°C bis 85°C zu der Rohmaterial-Trockenmischung, während dieses Rohmaterial bewegt wird, so dass ein Teig bzw. eine angefeuchtete Rohmaterial-Mischung mit einem Wassergehalt von 20% bis 60%, insbesondere von 38% bis 45% erhalten wird;
c) Zudosieren von Dampf mit einer Dampf-Eingangstemperatur von 100°C bis 150°C, insbesondere mit 100°C bis 120°C zu dem Teig, während der Teig bzw. die angefeuchtete Rohmaterial-Mischung bewegt wird;
d) Formen des so gewonnenen Teiges zu definierten Teig-Gebilden; und
f) Verarbeiten der frischgepressten Teig-Gebilde zu sogenannten Frischteigwaren, wobei das Massenverhältnis der zudosierten Wassermenge zu der zudosierten Dampfmenge im Bereich von 5 : 1 bis 1 : 1 liegt.

## Claims

1. A method for manufacturing pasta products out of gluten-free raw materials, e.g., flour and/or semolina based on corn, rise, millet or barley, or out of starch, wherein the method involves the following steps:
a) Preparing a dry raw material mixture;
b) Metering water with a temperature of 30°C to 90°C, in particular 75°C to 85°C, into the dry raw material mixture as this raw material is moved, thereby yielding a dough or moistened raw material mixture with a water content of 20% to 60%, in particular 38% to 45%;
c) Metering vapor with an initial vapor temperature of 100°C to 150°C, in particular 100°C to 120°C, into the dough, while the dough or moistened raw material mixture is moved;
d) Molding the dough obtained in this way into defined dough structures; and
e) Drying the molded dough structures into pasta products, wherein the mass ratio of the metered water quantity to the metered vapor quantity ranges from 5:1 to 1:1.

2. The method according to claim 1, **characterized in that** the dry raw material mixture is moved in step b) in a mixer, in particular a twin-screw mixer.

3. The method according to claim 1, **characterized in that** the dough in step c) is moved in a mixer, in particular a twin-screw mixer.

4. The method according to claim 3, **characterized in that** the vapor exposure time in the mixer in step c) measures about 10 s to 60 s, preferably 20 s to 30 s.

5. The method according to claim 1 or 2, **characterized in that** the moistened raw material mixture in step c) is moved on a conveyor belt, in particular a strip evaporator.

6. The method according to claim 5, **characterized in that** the vapor exposure time in step c) measured 30 s to 5 min.

7. The method according to one of claims 1 to 6, **characterized in that** at least one additive is metered into the raw material mixture.

8. The method according to claim 7, **characterized in that** the additive is metered into the dry raw material mixture in step a).

9. The method according to claim 7, **characterized in that** the additive is metered into the dry raw material mixture in step b).

10. The method according to one of claims 7 to 9, **characterized in that** the at least one monoglyceride or a diglyceride or a hardened fat is used as the additive.

11. The method according to one of claims 1 to 4, **characterized in that** the vapor metered in step c) has an operating pressure of 2 bar to 5 bar during evaporation.

12. The method according to one of claims 1 to 5, **characterized in that** the vapor is metered in step c) at an initial vapor pressure of 1 bar to 10 bar.

13. The method according to one of the above claims, **characterized in that** the mass ratio of the metered water quantity to the metered vapor quantity ranges from 4:1 to 2:1, most preferably measuring 3:1.

14. A device for manufacturing pasta products out of gluten-free raw materials, in particular for implementing a method according to claims 1 to 13, with:
- A mixer for generating a dry raw material mixture;
- A water-metering device (3; 3') for metering water into the dry raw material mixture;
- A vapor-metering device (6, 6') for metering vapor into the moistened raw material mixture;
- A raw material moving device (5, 6, 10a, 10b; 10a, 10b) for moving the dry raw material mixture and moistened raw material mixture;
- A molding device (10c) for molding the dough obtained from the raw material mixture into defined dough structures; and
- A pasta product dryer (11, 12, 13, 14) for drying the molded dough structures into pasta products, **characterized in that** the vapor can be metered in with an initial vapor pressure of 1 to 10 bar.

15. The device according to claim 14, **characterized in that** the raw material moving device exhibits a mixer, in particular a twin-screw mixer.

16. The device according to claim 14, **characterized in that** the raw material moving device exhibits a conveyor belt, in particular a strip evaporator.

17. The device according to claim 15, **characterized in that** the mixer is a mixing kneader (10a) with a housing, a raw material feed section, a raw dough discharge section, and at least two interacting working screws that extend from the raw material feed section to the raw dough discharge section within the housing in a conveying direction or axial direction, which accommodate mixing and kneading elements along with force-conveying elements.

18. The device according to claim 17, **characterized in that** the mixer/kneader cavity has a peristaltic dough kneading zone upstream from its raw dough discharge section, which exhibits at least one narrowing axial cavity zone in which the free cross sectional area of the cavity between the surface of the working screws and the interior wall of the housing measured perpendicular to the axial direction diminishes from a zone with a large free cross sectional area to a zone with a small free cross sectional area along the axial direction.

19. The device according to claim 17 or 18, **characterized in that** the mixing kneader exhibits a dough mixing and conveying zone upstream from its peristaltic dough-kneading zone, in which sequential axial zones with conveying screws and axial zones with mixing units are arranged on the working screws along the conveying direction.

20. The device according to one of claims 17 to 19, **characterized in that** the mixing kneader exhibits a dough milling or working zone upstream from its peristaltic dough-kneading zone, in which milling and working screws are arranged on the working screws along the conveying direction, with screw webs that have axially extending passages that fluidically connect the adjacent windings of a screw channel.

21. The device according to claim 20, **characterized in that** the passages are arranged jaggedly at the comb of the screw webs.

22. The device according to claim 20 or 23, **characterized in that** the passages are situated like a window between the core and comb of the screw webs.

23. The device according to one of claims 18 to 22, **characterized in that** the surface of the working screws and/or the interior wall of the housing in the peristaltic dough-kneading zone is covered by an anti-adhesive layer, preferably made of Teflon.

24. The device according to one of claims 15 to 23, **characterized in that** the raw material moving device is a dough press with upstream mixing trough, which is downstream from the twin-screw mixer.

25. The device according to one of claims 15 to 23, **characterized in that** the raw material moving device exhibits a single-screw press (10b), which is immediately downstream from the twin-screw mixer.

26. The device according to claim 25, **characterized in that** the single-screw press exhibits a housing, a raw material feed section, a dough discharge section along with a working screw that extends from the raw material feed section to the raw dough discharge section within the housing in a conveying direction or axial direction, which accommodate mixing and kneading elements along with force-conveying elements.

27. The device according to claim 26, **characterized in that** the mixing kneader cavity has a peristaltic dough kneading zone upstream from its raw dough discharge section, which exhibits at least one narrowing axial cavity zone in which the free cross sectional area of the cavity between the surface of the working screws and the interior wall of the housing measured perpendicular to the axial direction diminishes from a zone with a large free cross sectional area to a zone with a small free cross sectional area along the axial direction.

28. The device according to one of claims 17 to 27, **characterized in that** the mixing kneader exhibits a housing that can be heated to between 40°C and 100°C, preferably between 50°C and 75°C.

29. The device according to one of claims 25 to 27, **characterized in that** the single-screw press exhibits a housing that can be heated to between 20°C and 60°C, preferably between 40°C and 50°C.

30. The device according to one of claims 14 to 29, **characterized in that** the molding device (10c) exhibits a pressure head that can be heated to between 30°C and 60°C, preferably to between 40°C and 50°C.

31. The device according to one of claims 14 to 30, **characterized in that** all procedural steps are monitored, regulated and controlled online during the process.

32. A gluten-free pasta product manufactured using a method according to one of claims 1 to 13, characterize din that the starch contained in the product exhibits a starch swelling of 50% to 100%, in particular of 75% to 85%, wherein the starch grains contained in the product are largely intact.

33. The pasta product according to claim 32, **characterized in that** 60% to 80% of the starch grains contained in the product are intact or have not burst.

34. The pasta product according to claim 32 or 33, **characterized in that** it exhibits a cooking loss of less than 5% of the dry mass.

35. The pasta product according to one of claims 32 to 34, **characterized in that** it exhibits a fat content of less than 1% of the dry mass.

36. The pasta product according to one of claims 32 to 35, **characterized in that** it is manufactured out of gluten-free raw materials, such as flour and/or semolina based on corn, rice, millet or barley, or out of starch.

37. A method for manufacturing fresh pasta products out of gluten-free raw materials, e.g., flour and/or semolina based on corn, rice, millet or barley, or out of starch, wherein the method exhibits the following steps:
a) Preparing a dry raw material mixture;
b) Metering water with a temperature of 30°C to 90°C, in particular 75°C to 85°C, into the dry raw material mixture as this raw material is moved, thereby yielding a dough or moistened raw material mixture with a water content of 20% to 60%, in particular 38% to 45%;
c) Metering vapor with an initial vapor temperature of 100°C to 150°C, in particular 100°C to 120°C, into the dough, while the dough or moistened raw material mixture is moved;
d) Molding the dough obtained in this way into defined dough structures; and
e) Drying the molded dough structures into pasta products, wherein the mass ratio of the metered water quantity to the metered vapor quantity ranges from 5:1 to 1:1.

## Revendications

1. Procédé de fabrication de pâtes à partir de matières premières exemptes de gluten, comme par exemple de farine et/ou semoule à base de maïs, riz, sarrasin ou orge ou de fécule, ce procédé comprenant les étapes suivantes:
a) élaboration d'un mélange sec de matières premières;
b) ajout d'eau à une température de 30° C à 90° C, notamment de 75° C à 85° C, dans le mélange sec de matières premières pendant que cette matière première est déplacée, de sorte qu'on obtient une pâte ou un mélange humidifié de matières premières ayant une teneur en eau de 20 % à 60 %, notamment de 38 % à 45 %;
c) ajout de vapeur avec une température initiale de la vapeur de 100° C à 150° C, notamment de 100° C à 120° C, dans la pâte pendant que la pâte ou le mélange humidifié de matières premières est déplacé;
d) moulage de la pâte ainsi obtenue en formes de pâtes définies; et
e) séchage des formes en pâte moulée pour obtenir des pâtes alimentaires, le rapport quantitatif entre la quantité d'eau ajoutée et la quantité de vapeur ajoutée étant de l'ordre de 5:1 à 1:1.

2. Procédé selon la revendication 1, **caractérisé en ce que** le déplacement du mélange sec de matières premières a lieu en étape b) dans un mélangeur, notamment un mélangeur à deux arbres.

3. Procédé selon la revendication 1, **caractérisé en ce que** le déplacement de la pâte a lieu en étape c) dans un mélangeur, notamment un mélangeur à deux arbres.

4. Procédé selon la revendication 3, **caractérisé en ce que** le temps d'action de la vapeur dans le mélangeur en étape c) est d'environ 10 s à 60 s, de préférence 20 s à 30 s.

5. Procédé selon la revendication 1 ou 2, **caractérisé en ce que** le déplacement du mélange humidifié de matières premières a lieu en étape c) sur une bande transporteuse, notamment un cuiseur à vapeur à bande.

6. Procédé selon la revendication 5, **caractérisé en ce que** le temps d'action de la vapeur en étape c) est de 30 s à 5 min.

7. Procédé selon une des revendications 1 à 6, **caractérisé en ce qu'**on ajoute au mélange de matières premières au moins un additif.

8. Procédé selon la revendication 7, **caractérisé en ce que** l'additif est ajouté au mélange sec de matières premières en étape a).

9. Procédé selon la revendication 7, **caractérisé en ce que** l'additif est ajouté au mélange sec de matières premières en étape b).

10. Procédé selon une des revendications 7 à 9, **caractérisé en ce qu'**on emploie comme additif au moins un monoglycéride ou un diglycéride ou une matière grasse durcie.

11. Procédé selon une des revendications 1 à 4, **caractérisé en ce que** la vapeur ajoutée en étape c) présente lors de la cuisson à la vapeur une pression opérationnelle de 2 bar à 5 bar.

12. Procédé selon une des revendications 1 à 5, **caractérisé en ce que** l'ajout de vapeur a lieu en étape c) avec une pression d'entrée de vapeur de 1 bar à 10 bar.

13. Procédé selon une des revendications précédentes, **caractérisé en ce que** le rapport de masse entre la quantité d'eau ajoutée et la quantité de vapeur ajoutée se situe dans la plage de 4:1 à 2:1 et le plus préférentiellement à 3:1.

14. Installation pour la réalisation d'un procédé de fabrication de pâtes alimentaires à partir de matières premières exemptes de gluten, notamment pour la réalisation d'un procédé selon les revendications 1 à 13, comportant:
> un dispositif de mélange pour élaborer un mélange sec de matières premières;
> un dispositif de dosage d'eau (3; 3') pour ajouter de l'eau dans le mélange sec de matières premières;
> un dispositif de dosage de vapeur (6, 6') pour ajouter de la vapeur dans le mélange humidifié de matières premières;
> un dispositif de déplacement des matières premières (5, 6, 10a, 10b; 10a, 10b) pour déplacer le mélange sec de matières premières et le mélange humidifié de matières premières;
> un dispositif de moulage (10c) pour mouler la pâte obtenue à partir du mélange de matières premières en formes de pâte définies; et
> un dispositif de séchage de pâtes (11, 12, 13, 14) pour sécher les formes de pâte moulées pour obtenir des pâtes alimentaires, **caractérisé en ce que** la vapeur peut être ajoutée avec une pression d'entrée de vapeur de 1 bar à 10 bar.

15. Installation selon la revendication 14, **caractérisée en ce que** le dispositif de déplacement des matières premières comporte un mélangeur, notamment un mélangeur à deux arbres.

16. Installation selon la revendication 14, **caractérisée en ce que** le dispositif de déplacement des matières premières comporte une bande transporteuse, notamment un cuiseur à vapeur à bande.

17. Installation selon la revendication 15, **caractérisée en ce que** le mélangeur est un mélangeur-pétrin (10a) comportant un boîtier, une section d'acheminement de matières premières, une section de sortie de pâte brute ainsi qu'au moins deux arbres opérationnels coopérant entre eux et s'étendant de la section d'acheminement de matières premières à la section de sortie de pâte brute à l'intérieur du boîtier dans un sens de convoyage ou axial et sur lesquels des éléments de mélange et de pétrissage ainsi que des éléments de convoyage forcé sont disposés.

18. Installation selon la revendication 17, **caractérisée en ce que** la cavité du mélangeur-pétrin présente en amont de sa section de sortie de pâte brute une zone de pétrissage péristaltique de la pâte comportant respectivement au moins une zone de cavité axiale se rétrécissant, dans laquelle la surface transversale libre mesurée perpendiculairement au sens axial de la cavité, entre la surface supérieure des arbres opérationnels et la paroi intérieure du boîtier, diminue depuis une zone à grande surface transversale libre vers une zone à petite surface transversale libre dans le sens axial.

19. Installation selon la revendication 17 ou 18, **caractérisée en ce que** le mélangeur-pétrin présente en amont de sa zone de pétrissage péristaltique une zone de mélange de pâte et de convoyage de pâte dans laquelle des zones axiales se succédant sur les arbres opérationnels dans le sens de convoyage et comportant des vis de convoyage et des zones axiales comportant des blocs mélangeurs sont disposées.

20. Installation selon une des revendications 17 à 19, **caractérisée en ce que** le mélangeur-pétrin présente également de préférence, en amont de sa zone de pétrissage péristaltique, une zone de foulage ou de moulage de la pâte, dans laquelle sont disposées dans le sens de convoyage, au niveau des arbres opérationnels, des vis de foulage et de moulage qui comportent dans leurs traverses de vis des passages s'étendant dans le sens axial et par lesquels les spires voisines d'un pas de vis sont mutuellement en liaison de fluide.

21. Installation selon la revendication 20, **caractérisée en ce que** les passages sont disposés à la manière de brèches sur le peigne constitué par les traverses de la vis.

22. Installation selon la revendication 20 ou 23, **caractérisée en ce que** les passages sont disposés à la manière de fenêtres entre le noyau et le peigne constitué par les traverses de la vis.

23. Installation selon une des revendications 18 à 22, **caractérisée en ce que**, au niveau de la zone de pétrissage péristaltique, la surface des arbres opérationnels et/ou la paroi intérieure du boîtier est revêtue d'une couche anti-adhésive, de préférence en téflon.

24. Installation selon une des revendications 15 à 23, **caractérisée en ce que** le dispositif de déplacement des matières premières présente une presse à pâtes en amont de laquelle est installée une cuve de mélange et qui est installée immédiatement en aval du mélangeur à deux arbres.

25. Installation selon une des revendications 15 à 23, **caractérisée en ce que** le dispositif de déplacement des matières premières présente une presse à vis à arbre unique (10b) qui est installée immédiatement en aval du mélangeur à deux arbres (10a).

26. Installation selon la revendication 25, **caractérisée en ce que** la presse à vis à arbre unique comprend un boîtier, une section d'acheminement de pâte brute, une section de sortie de pâte ainsi qu'un arbre opérationnel s'étendant de la section d'acheminement de pâte brute à la section de sortie de pâte à l'intérieur du boîtier dans un sens de convoyage ou un sens axial et sur lequel sont disposés des éléments de convoyage forcé.

27. Installation selon la revendication 26, **caractérisée en ce que** la cavité de la presse à vis à arbre unique présente en amont de sa section de sortie de pâte une zone de pétrissage péristaltique de la pâte comportant respectivement au moins une zone de cavité axiale se rétrécissant et dans laquelle la surface transversale libre de la cavité mesurée perpendiculairement au sens axial, entre la surface de l'arbre opérationnel et la paroi intérieure du boîtier, diminue depuis une zone à grande surface transversale libre vers une zone à petite surface transversale libre dans le sens axial.

28. Installation selon une des revendications 17 à 27, **caractérisée en ce que** le mélangeur-pétrin comporte un boîtier pouvant être tempéré entre 40° C et 100° C, de préférence entre 50° C et 75° C.

29. Installation selon une des revendications 25 à 27, **caractérisée en ce que** la presse à vis à arbre unique présente un boîtier pouvant être tempéré entre 20° C et 60° C, de préférence entre 40° C et 50° C.

30. Installation selon une des revendications 14 à 29, **caractérisée en ce que** le dispositif de moulage (10c) présente une tête de presse pouvant être tempérée entre 30° C et 60° C, de préférence entre 40° C et 50° C.

31. Installation selon une des revendications 14 à 30, **caractérisée en ce que** toutes les étapes opératoires sont surveillées, régulées et contrôlées en ligne dans le processus.

32. Produit de pâtes exemptes de gluten qui a été fabriqué par un procédé selon une des revendications 1 à 13, **caractérisé en ce que** la fécule contenue dans le produit présente un gonflement féculent de 50 à 100 %, notamment de 75 % à 85 %, les grains de fécule contenus dans le produit étant majoritairement intacts.

33. Produit de pâtes selon la revendication 32, **caractérisé en ce que** les grains de fécule contenus dans le produit sont à 60 % à 80 % intacts ou non éclatés.

34. Produit de pâtes selon la revendication 32 ou 33, **caractérisé en ce qu'**il présente une perte à la cuisson de moins de 5 % de la masse sèche.

35. Produit de pâtes selon une des revendications 32 à 34, **caractérisé en ce qu'**il présente une teneur en matière grasse inférieure à 1 % de la masse sèche.

36. Produit de pâtes selon une des revendications 32 à 35, **caractérisé en ce qu'**il est fabriqué à partir de matières premières exemptes de gluten, comme de la farine et/ou de la semoule de maïs, riz, sarrasin ou orge ou de fécule.

37. Procédé de fabrication de pâtes fraîches à partir de matières premières exemptes de gluten, comme de la farine et/ou de la semoule de maïs, riz, sarrasin ou orge ou de fécule, ce procédé comportant les étapes suivantes:
a) élaboration d'un mélange sec de matières premières;
b) ajout d'eau à une température de 30° C à 90° C, notamment de 75° C à 85° C, dans le mélange sec de matières premières pendant que cette matière première est déplacée, de sorte qu'on obtient une pâte ou un mélange humidifié de matières premières ayant une teneur en eau de 20 % à 60 %, notamment de 38 % à 45 %;
c) ajout de vapeur avec une température initiale de la vapeur de 100° C à 150° C, notamment de 100° C à 120° C, dans la pâte pendant que cette matière première ou le mélange humidifié de matières premières est déplacé;
d) moulage de la pâte ainsi obtenue en formes de pâtes définies; et
e) transformation des formes de pâtes fraîchement pressées en pâtes dites fraîches, le rapport quantitatif entre la quantité d'eau ajoutée et la quantité de vapeur ajoutée étant de l'ordre de 5:1 à 1:1.
